# EUROPÄISCHE PATENTSCHRIFT

(11) **EP 3 810 459 B1**
(45) Veröffentlichungstag und Bekanntmachung des Hinweises auf die Patenterteilung: **06.04.2022**
(21) Anmeldenummer: 19732588.9
(22) Anmeldetag: 18.06.2019
(51) Int. Cl.: B60P 7/08

(54) **FLÄCHIGES SICHERUNGSMITTEL**
FLAT SECURING MEANS
MOYEN DE SÉCURISATION PLAT

(30) Priorität: 25.06.2018 DE 202018103592 U
(43) Veröffentlichungstag der Anmeldung: 28.04.2021
(73) Patentinhaber: Westdeutscher Drahtseil-Verkauf Dolezych GmbH & Co. KG, 44147 Dortmund (DE)
(72) Erfinder: SCHÖBEL, Uwe, 58730 Fröndenberg (DE)
(74) Vertreter: Andrejewski - Honke Patent- und Rechtsanwälte Partnerschaft mbB
(86) Internationale Anmeldenummer: PCT/EP2019/066035
(87) Internationale Veröffentlichungsnummer: WO 2020/002047

(56) Entgegenhaltungen:
- EP-A1- 3 154 820
- DE-A1- 3 726 663
- DE-U1-202005 014 236
- US-A1- 2012 241 108

## Beschreibung

Die Erfindung betrifft ein flächiges Sicherungsmittel, insbesondere Sicherungsnetz, zum Sichern einer Ladung während ihres Transportes auf der Ladefläche eines Fahrzeuges, mit einer größenvariablen flexiblen Sicherungsfläche, und mit randseitig der Sicherungsfläche vorgesehenen Anschlagvorrichtungen zur lösbaren Fixierung der Sicherungsfläche an Bordwänden des Fahrzeuges.

Flächige Sicherungsmittel des eingangs beschriebenen Aufbaus sorgen in der Regel dafür, dass auf einer Transportfläche des hiermit ausgerüsteten Fahrzeuges befindliche Ladung oder mehrere Ladegüter durch fahrdynamische Vorgänge nicht oder nur unerheblich rutschen. Dazu wird das betreffende flächige Sicherungsmittel meistens zur Längssegmentierung der Transportfläche an beidseitigen Bordwänden des Fahrzeuges festgelegt. Zu diesem Zweck kann das Fahrzeug beispielsweise mit Schienen oder Öffnungen in den Bordwänden ausgerüstet werden. Bei den Anschlagvorrichtungen mag es sich um Adapter handeln, wie sie beispielsweise im Patent EP 3 154 820 B1 der Anmelderin im Detail beschrieben werden. Das gilt selbstverständlich nicht einschränkend.

Daneben wird ein ähnliches flächiges Sicherungsmittel im Gebrauchsmuster DE 20 2016 104 193 U1 vorgestellt. Hier ist insgesamt zusätzlich zu der flexiblen Sicherungsfläche eine mit dem Netzwerk über Schlaufen verbundene Sicherungsstange vorgesehen. Die Sicherungsstange verfügt über einen hieran stufenlos festlegbaren Adapter. Auf diese Weise kann die jeweilige Schlaufe oder die Sicherungsstange beispielsweise an einer Bordwand des hiermit ausgerüsteten Fahrzeuges festgelegt werden.

Andere und vergleichbare flächige Sicherungsmittel werden in der DE 20 2015 100 289 U1 oder auch der DE 20 2012 101 216 U1 der Anmelderin beschrieben. Im letztgenannten Fall sorgen angeschlossene Zurrgurte zur Anpassung an die entsprechende Ladung.

Bei einem flächigen Sicherungsmittel entsprechend der US 2,455,237 des eingangs beschriebenen Aufbaus besteht die Möglichkeit, die flexible Sicherungsfläche je nach der zu sichernden Ladung größenvariabel auslegen zu können. Dazu sind unterschiedliche Konstellationen der flexiblen Sicherungsfläche denkbar, unter anderem dergestalt, dass die flexible Sicherungsfläche aufeinander gefaltet wird.

Im Zusammenhang mit einer Planenabdeckung für Lastkraftwagen entsprechend der DE 37 26 663 A1 ist die mindestens eine Heckplane mit einer Zugvorrichtung versehen, die mehrere an oder nahe einer Unterkante der Plane befestigte Zugschnüre enthält. Dadurch lässt sich die Plane nach Art eines Raffrollos beaufschagen.

Neben der Möglichkeit, die flexible Sicherungsfläche an unterschiedliche Ladungen größenvariabel anpassen zu können, ergibt sich in der Praxis oftmals das Problem, die flexible Sicherungsfläche einfach zu öffnen und zu schließen, um einen ungehinderten Zugang zu den dahinter oder davor befindlichen Ladegütern zu ermöglichen. Außerdem wird oftmals eine wechselnde Positionierung des flächigen Sicherungsmittels im Innern des Laderaums gefordert. Dazu müssen zunächst die einzelnen Anschlagvorrichtungen gegenüber den Bordwänden gelöst und danach die flexible Sicherungsfläche an einer anderen gewünschten Stelle wieder eingebaut werden. Da die flächigen Sicherungsmittel je nach Größe des Laderaumes eine Flächengröße von mehreren Quadratmetern bis 10 m² und mehr aufweisen können, ist die Handhabung oftmals nicht einfach, zumal hierfür lediglich der Fahrer als Bedienperson bei einem LKW-Auflieger als Beispiel zur Verfügung steht. Neben Laderäumen von LKW-Aufliegern können selbstverständlich auch Zuganhänger oder sogar Container mit dem betreffenden Sicherungsmittel ausgerüstet werden. Hier will die Erfindung insgesamt Abhilfe schaffen.

Der Erfindung liegt das technische Problem zugrunde, ein derartiges flächiges Sicherungsmittel so weiter zu entwickeln, dass eine einfache Handhabung möglich ist und insbesondere der Wechsel von einer zur nächsten Position innerhalb eines Landeraumes einfach und schnell gelingt.

Zur Lösung dieser technischen Problemstellung ist ein gattungsgemäßes flächiges Sicherungsmittel im Rahmen der Erfindung dadurch gekennzeichnet, dass eine Raffvorrichtung vorgesehen ist, welche die flexible Sicherungsfläche zumindest von einer ausgedehnten Sicherungsstellung in eine zusammengefaltete Vorratsstellung und zurück überführt, wobei die Raffvorrichtung zumindest ein an ein in Sicherungsstellung unteres Ende der Sicherungsfläche angeschlossenes Raffseil aufweist und endseitig des Raffseils eine Handhabe vorgesehen ist, und wobei die Handhabe mit einem Befestigungselement zur lösbaren Fixierung beispielsweise an der Bordwand ausgerüstet ist.

Im Rahmen der Erfindung kommt es also zunächst einmal und primär nicht (nur) darauf an, die flexible Sicherungsfläche an unterschiedliche Dimensionen der Ladung oder einzelner Ladegüter anzupassen. Vielmehr sorgt die Raffvorrichtung dafür, dass die flexible Sicherungsfläche gefaltet werden kann. Dabei lässt sich die flexible Sicherungsfläche in zumindest zwei Positionen mithilfe der Raffvorrichtung einfach und schnell überführen. Die eine erste Position korrespondiert dazu, dass die flexible Sicherungsfläche ihre Sicherungsstellung einnimmt. Die ausgedehnte Sicherungsstellung korrespondiert dazu, dass die flexible Sicherungsfläche typischerweise ihre größte oder nahezu größte Flächenausdehnung aufweist und in dieser Sicherungsstellung zwischen gegenüberliegenden Bordwänden des Fahrzeuges gespannt ist.

Dadurch kann die flexible Sicherungsfläche in der Sicherungsstellung bestimmungsgemäß dafür sorgen, dass davor oder dahinter befindliche Ladung an einem Verrutschen größtenteils gehindert wird. Zu diesem Zweck sorgt die flexible Sicherungsfläche für eine Segmentierung des Laderaumes an gewünschter Stelle.

Neben dieser von der flexiblen Sicherungsfläche eingenommenen Sicherungsstellung kann die flexible Sicherungsfläche auch eine zusammengefaltete Vorratsstellung einnehmen. In dieser zusammengefalteten Vorratsstellung wird die flexible Sicherungsfläche in der Regel mehrfach ziehharmonikaartig gefaltet. Hierfür sorgt die Raffvorrichtung. Außerdem korrespondiert die Vorratsstellung meistens dazu, dass in diesem Zusammenhang die flexible Sicherungsfläche an ihrem oberen Ende zu der Vorratsstellung zusammengefaltet wird. Dadurch steht unterhalb der zusammengefalteten Vorratsstellung ein Durchgang zur Verfügung. Außerdem lässt sich das flächige Sicherungsmittel in dieser Vorratsstellung besonders einfach und schnell manipulieren, beispielsweise von den Bordwänden trennen und an anderer Position wieder festlegen. Dadurch ist die Handhabung und Montage gegenüber bisherigen Vorgehensweisen deutlich erleichtert.

Erfindungsgemäß weist die Raffvorrichtung zumindest das an ein in Sicherungsstellung unteres Ende der Sicherungsfläche angeschlossene Raffseil auf. Das Raffseil ist folglich mit einem Ende an das untere Ende der Sicherungsfläche angeschlossen. Am freien Ende ist das Raffseil mit einer Handhabe ausgerüstet. Außerdem verfügt die Raffvorrichtung vorteilhaft und zusätzlich über wenigstens eine Umlenkeinheit für das Raffseil. Die Umlenkeinheit ist regelmäßig am oberen Ende der Sicherungsfläche vorgesehen und angeordnet.

Meistens sind mehrere Raffseile realisiert, die jeweils mit ihrem einen Ende gemeinsam an das untere Ende der Sicherungsfläche angeschlossen werden. Die mehreren Raffseile sind dabei regelmäßig beabstandet zueinander an das untere Ende der Sicherungsfläche angeschlossen. Außerdem verlaufen die Raffseile meistens parallel zueinander in Raffrichtung. Die Raffrichtung korrespondiert dabei üblicherweise zu einer Vertikalrichtung und ist folglich senkrecht im Vergleich zu der zuvor bereits angesprochenen Transportfläche des Laderaumes des Fahrzeuges orientiert. Außerdem werden die Raffseile im Allgemeinen über zugehörige Umlenkeinheiten am oberen Ende der Sicherungsfläche geführt.

Um die Raffseile nicht einzeln handhaben und beaufschlagen zu müssen, werden sie im Allgemeinen mithilfe eines Koppelelementes zusammengefasst. Dadurch ist es zugleich erforderlich, mit Raffseilen unterschiedlicher Länge zu arbeiten, und zwar je nach ihrer jeweiligen Position gegenüber dem unteren Ende der Sicherungsfläche. Durch die Zusammenfassung der Raffseile mithilfe des Koppelementes können die mehreren Raffseile gemeinsam mithilfe der einen (einzigen) Handhabe beaufschlagt werden. Dazu mag die Handhabe beispielsweise als Schlaufe ausgebildet sein, welche von einer Bedienperson ergriffen und in der Regel ziehend beaufschlagt wird, um die flexible Sicherungsfläche von ihrer ausgedehnten Sicherungsstellung in die zusammengefaltete Vorratsstellung zu überführen.

Die Handhabe ist erfindungsgemäß in diesem Zusammenhang mit einem Befestigungselement ausgerüstet. Das Befestigungselement dient zur lösbaren Fixierung der Handhabe und folglich der Raffvorrichtung insgesamt beispielsweise an einer der beiden sich gegenüberliegenden Bordwände. Auf diese Weise wird die Sicherungsstellung des flächigen Sicherungsmittels insgesamt gesichert und kann gewährleistet werden, dass die flexible Sicherungsfläche in ihrer zusammengefalteten Vorratsstellung verbleibt. Sobald das Befestigungselement im Beispielfall von der Bordwand gelöst wird, gibt die Raffvorrichtung nach und kann folglich die flexible Sicherungsfläche von der zuvor eingenommenen zusammengefalteten Vorratsstellung schwerkraftunterstützt in ihre ausgedehnte Sicherungsstellung übergehen.

Das zuvor bereits angesprochene Koppelelement ist im Allgemeinen vor der Handhabe angeordnet. Die mehreren Umlenkeinheiten für die einzelnen Raffseile sind meistens am oberen Ende der Sicherungsfläche in Reihe angeordnet. Das Koppelelement verfügt seinerseits über eine Platzierung vor der ersten Umlenkeinheit. Auf diese Weise werden die einzelnen und über die zugehörigen Umlenkeinheiten geführten Raffseile nach Passieren der ersten Umlenkeinheit in der Reihe der Umlenkeinheiten mithilfe des Koppelelementes zusammengefasst. Dem Koppelelement folgt die Handhabe, so dass ein Bediener mithilfe der (einzigen) Handhabe die sämtlichen Raffseile automatisch und gemeinsam beaufschlagen kann. Dadurch ist sichergestellt, dass die flexible Sicherungsfläche mit ihrem unteren Ende bei einer Beaufschlagung der Handhabe überwiegend gleichphasig von einer Transportfläche abgehoben und ohne Schrägstellung in die zusammengefaltete Vorratsstellung übergeht.

Damit das einzelne Raffseil bzw. die mehreren Raffseile einwandfrei an der flexiblen Sicherungsfläche geführt werden, ist das betreffende Raffseil in Raffrichtung mithilfe von Führungseinheiten an der flexiblen Sicherungsfläche festgelegt. Bei der Führungseinheit kann es sich um eine Schlaufe, eine Öse, einen Bügel etc. handeln. Selbstverständlich sind auch Kombinationen möglich.

Das Raffseil als solches ist nicht notwendigerweise zylindrisch oder seilartig ausgebildet. Denn der Begriff Raffseil ist im Rahmen der Erfindung weit auszulegen und umfasst grundsätzlich auch beispielsweise ein Kunststoffband, beispielsweise ein Kunststoffgewebeband. Im Regelfall handelt es sich bei dem Raffseil um ein Stahlseil oder Kunststoffseil. Um die Reibung zu minimieren, kann das Stahlseil darüber hinaus mit beispielsweise Kunststoff ummantelt sein. Selbstverständlich sind auch Kombinationen denkbar.

Nach weiterer vorteilhafter Ausgestaltung ist die flexible Sicherungsfläche darüber hinaus noch mit einem zusätzlichen Strukturelement zumindest am oberen Ende der flexiblen Sicherungsfläche ausgerüstet. Bei dem zusätzlichen Strukturelement kann es sich beispielsweise um einen Kunststoffgurt, eine Sicherungsstange etc. handeln. Für den Fall, dass eine Sicherungsstange zum Einsatz kommt, lassen sich die eine oder die mehreren Umlenkeinheiten für das eine oder die mehreren Raffseile im Innern der Sicherungsstange realisieren. Außerdem können die Raffseile auf diese Weise im Innern der Sicherungsstange geschützt geführt werden, zumindest am oberen Ende der flexiblen Sicherungsfläche.

Die genannte Sicherungsstange hat darüber hinaus den weiteren Vorteil, dass mit ihrer Hilfe das flächige Sicherungsmittel insgesamt besonders einfach, schnell und intuitiv zur Segmentierung des Laderaumes bzw. der Transportfläche des hiermit ausgerüsteten Fahrzeuges eingesetzt werden kann. Zu diesem Zweck ist es denkbar, dass an jeweils Längsbordwänden des Laderaumes bzw. des Fahrzeuges jeweils parallel zueinander verlaufende und sich gegenüberliegende Schienen vorgesehen sind. An oder in diesen Schienen kann die fragliche Sicherungsstange geführt werden. Dabei wird man meistens so vorgehen, dass die betreffenden Schienen jeweils kopfseitig der zugehörigen Bordwand bzw. Längsbordwand angeordnet sind.

Auf diese Weise kann das flächige Sicherungsmittel mithilfe der in den beidseitigen Schienen geführten Sicherungsstange an praktisch beliebiger Stelle im Vergleich zur Transportfläche gegenüber der jeweiligen Schiene fixiert werden und für die gewünschte Segmentierung des Laderaums am beabsichtigen Ort sorgen. Dazu ist es lediglich erforderlich, die zuvor in der zusammengefalteten Vorratsstellung befindliche flexible Sicherungsfläche in ihre ausgedehnte Sicherungsstellung zu überführen. Das lässt sich im einfachsten Fall dadurch bewerkstelligen, dass die mithilfe des Befestigungselementes fixierte Handhabe gelöst wird und so die flexible Sicherungsfläche schwerkraftunterstützt und automatisch von ihrer zusammengefalteten Vorratsstellung in die ausgedehnte Sicherungsstellung übergeht.

Darüber hinaus besteht die weitere Möglichkeit, die flexible Sicherungsfläche teilen oder öffnen zu können. Zu diesem Zweck mögen ein oder mehrere Klemmschlösser oder vergleichbare Trenneinrichtungen vorgesehen sein. Meistens lässt sich die flexible Sicherungsfläche in oder quer zu ihrer Längsrichtung teilen oder öffnen. Dadurch kann die flexible Sicherungsfläche beispielsweise geöffnet werden, um einer Bedienperson einen ungehinderten Zugang in den Laderaum beispielsweise hinter der flexiblen Sicherungsfläche zu ermöglichen.

Durch die Möglichkeit, die flexible Sicherungsfläche zu teilen, lässt sich darüber hinaus die Montage insgesamt vereinfachen. Denn dadurch, dass in diesem Zusammenhang typischerweise mit einem oder mehreren Klemmschlössern gearbeitet wird, lässt sich die flexible Sicherungsfläche einerseits in eingebautem Zustand zwischen den sich gegenüberliegenden Bordwänden spannen und kann andererseits entlastet werden, um die jeweils randseitig der Sicherungsfläche vorgesehenen Anschlagvorrichtungen gegenüber der zugehörigen Bordwand zu lösen bzw. aus entsprechenden Öffnungen in der Bordwand zu entfernen. Dieser gleichsam entlastete Zustand der flexiblen Sicherungsfläche kann auch bei der Einnahme ihrer zusammengefalteten Vorratsstellung beibehalten werden. Dazu mag die Handhabe mit ihrem zugehörigen Befestigungselement in diesem Fall nicht an der Bordwand fixiert werden, sondern vielmehr am oberen Rand der Sicherungsfläche. Hier kann beispielsweise ein mit dem Befestigungselement zusammenwirkender Haken realisiert sein.

Im Ergebnis wird insgesamt ein flächiges Sicherungsmittel vorgestellt, mit dessen Hilfe nicht nur ein Laderaum eines Fahrzeuges einwandfrei und an praktisch beliebiger Stelle segmentiert werden kann. Sondern die Laderaumsegmentierung gelingt einfach und intuitiv und kann auch nur von einer einzigen Bedienperson problemlos ausgeführt werden. Denn beim Positionswechsel des flächigen Sicherungsmittels wird man typischerweise so vorgehen, dass mithilfe der Raffvorrichtung zunächst die flexible Sicherungsfläche in ihre zusammengefaltete Vorratsstellung überführt wird. Im Anschluss daran wird dann das flächige Sicherungsmittel insgesamt an der gewünschten neuen Position fixiert, indem einzelne der Anschlagvorrichtungen beispielsweise an Bordwänden des Fahrzeuges festgelegt werden. Sofern in diesem Zusammenhang ein zusätzliches Strukturelement und beispielhaft eine Sicherungsstange eingesetzt wird, kann auch schlicht und ergreifend die betreffende Sicherungsstange entlang der zusätzlich vorgesehenen Schienen kopfseitig der zugehörigen Bordwände verschoben werden.

Jedenfalls lässt sich das flächige Sicherungsmittel einwandfrei und flexibel an der gewünschten Position im Laderaum anordnen. Anschließend sorgt die zunächst mithilfe des Befestigungselementes an der Handhabe fixierte Raffvorrichtung nach ihrer Entlastung dafür, dass die flexible Sicherungsfläche freigegeben wird und schwerkraftunterstützt von ihrer zusammengefalteten Vorratsstellung automatisch in die ausgedehnte Sicherungsstellung übergeht. Jetzt ist das flächige Sicherungsmittel unmittelbar einsatzbereit und kann die gewünschte Sicherungsfunktion übernehmen. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: das flächige Sicherungsmittel in ausgedehnter Sicherungsstellung,
- Fig. 2: den Gegenstand nach Fig. 1 in zusammengefalteter Vorratsstellung und
- Fig. 3: den Gegenstand nach den Fig. 1 und 2 schematisch.

In den Figuren ist ein flächiges Sicherungsmittel dargestellt, bei dem es sich vorliegend um ein Sicherungsnetz handelt. Das Sicherungsnetz setzt sich aus jeweils Kunststoffgurten 1, 2 zusammen. Bei den Kunststoffgurten handelt es sich um Vertikalgurte 1 und Horizontalgurte 2, die jeweils in Kreuzungspunkten miteinander verbunden sind. Das kann auf jede denkbare Art und Weise erfolgen, beispielsweise durch Vernähen, im Sinne einer Wirkverbindung, durch Verkleben etc.

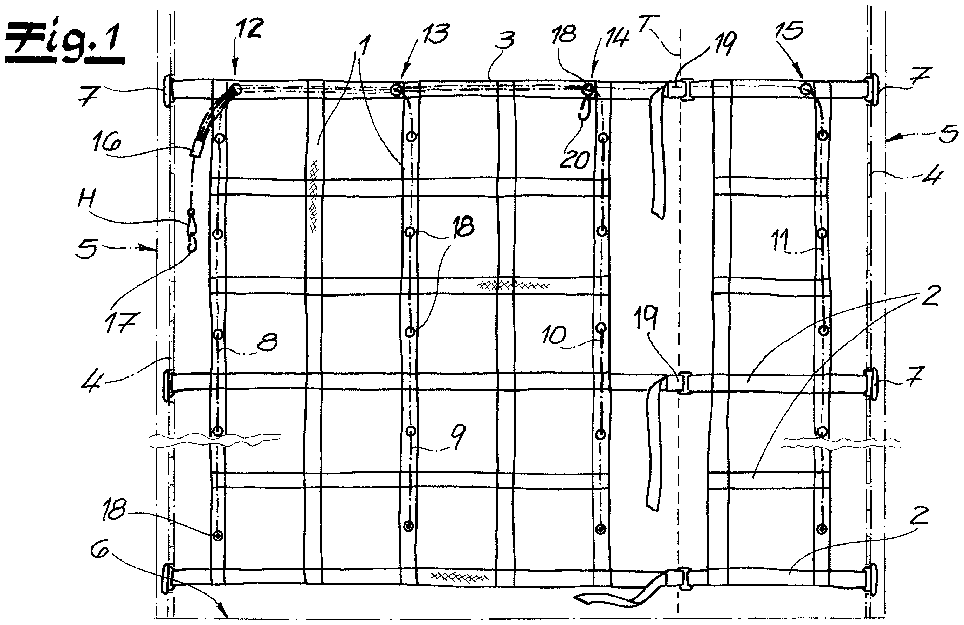

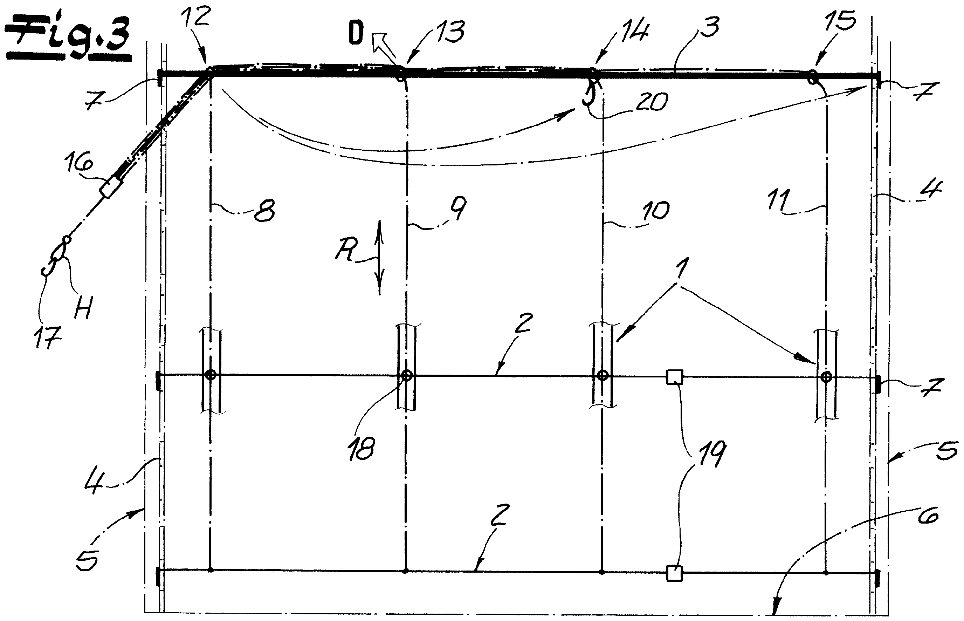

Die Gurte bzw. Kunststoffgurte 1, 2 definieren insgesamt eine größenvariable flexible Sicherungsfläche 1, 2. Außerdem ist nach dem Ausführungsbeispiel und optional noch ein zusätzliches Strukturelement 3 vorgesehen, welches zumindest am oberen Ende der flexiblen Sicherungsfläche 1, 2 angeordnet ist. Bei dem zusätzlichen Strukturelement 3 handelt es sich nach dem Ausführungsbeispiel in der Fig. 1 um einen Kunststoffgurt. Grundsätzlich kann an dieser Stelle aber auch eine Sicherungsstange zum Einsatz kommen, wie sie in der Fig. 3 angedeutet ist. Die Sicherungsstange 3 mag dabei in jeweils kopfseitig von Längsbordwänden 5 angeordneten Schienen 4 in Längsrichtung eines Laderaumes eines Fahrzeuges geführt werden. Von dem fraglichen Fahrzeug erkennt man neben den beiden in Längsrichtung verlaufenden Bordwänden bzw. Längsbordwänden 5 zusätzlich noch eine Transportfläche 6, auf welcher Ladegut abgestellt und mithilfe des flächigen Sicherungsmittels gegenüber Verrutschen gesichert wird.

Die flexible Sicherungsfläche 1, 2 bzw. das flächige Sicherungsmittel verfügt darüber hinaus noch über randseitig der Sicherungsfläche 1, 2 vorgesehene Anschlagvorrichtungen 7. Bei den Anschlagvorrichtungen 7 mag es sich um Haken, Ösen oder Adapter handeln, wie sie in der zuvor bereits in Bezug genommenen Patentschrift EP 3 154 820 B1 vorgestellt werden. Die randseitig realisierten Anschlagvorrichtungen 7 lassen sich lösbar an den Bordwänden 5 des nicht dargestellten Fahrzeuges fixieren. Dazu sind an den betreffenden Bordwänden 5 beispielsweise Schienen mit angedeuteten Öffnungen vorgesehen. Grundsätzlich können die Öffnungen aber auch direkt in den Bordwänden 5 realisiert sein. Jedenfalls lässt sich die flexible Sicherungsfläche 1, 2 und mithin das flächige Sicherungsmittel insgesamt zur Segmentierung des Laderaumes des Fahrzeuges einsetzen. Dazu kann das flächige Sicherungsmittel flexibel an einer beliebigen Position in Längsrichtung der Transportfläche 6 positioniert werden, indem die Anschlagvorrichtungen 7 in die Öffnungen in den Bordwänden bzw. Längsbordwänden 5 eingehängt werden.

Es sollte betont werden, dass das nachfolgend noch im Detail zu beschreibende flächige Sicherungsmittel nicht auf die dargestellte Ausführungsform mit dem Sicherungsnetz aus den sich kreuzenden Gurten 1, 2 beschränkt ist. Sondern bei dem Sicherungsnetz kann es sich grundsätzlich auch um ein kleinmaschiges Seilnetz handeln. Alternativ hierzu kann als flexible Sicherungsfläche 1, 2 aber auch eine Kunststoffplane, ein Kunststoffgewebe oder sonst wie ein flexibles textiles oder nicht textiles Flächenelement zum Einsatz kommen.

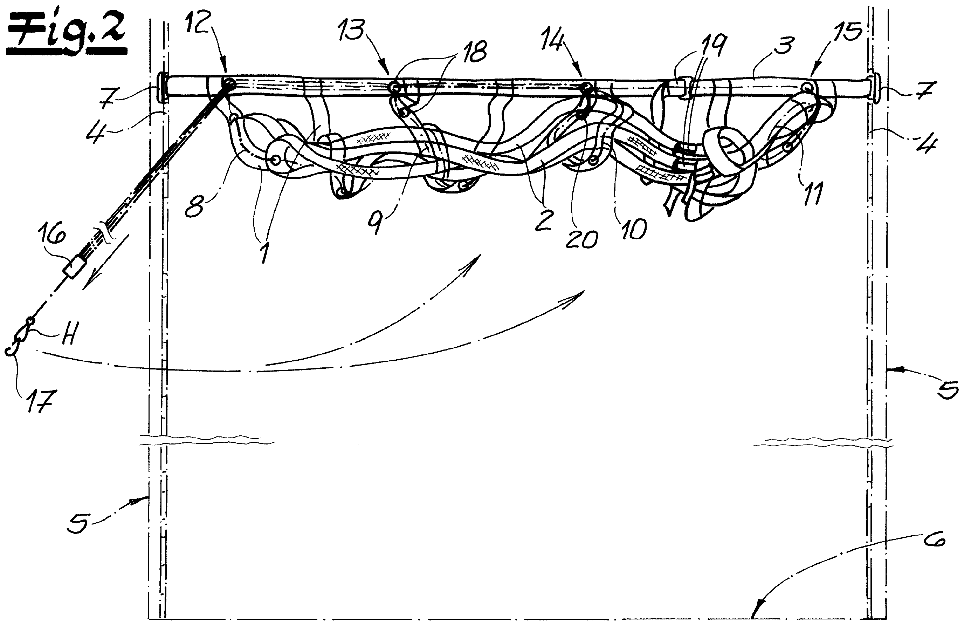

Erfindungsgemäß und von besonderer Bedeutung ist nun zusätzlich noch und ergänzend zu der flexiblen Sicherungsfläche 1, 2 und den randseitigen Anschlagvorrichtungen 7 eine Raffvorrichtung 8 bis 11, H vorgesehen. Mithilfe der Raffvorrichtung 8 bis 11, H kann die flexible Sicherungsfläche 1, 2 zumindest von einer ausgedehnten und in der Fig. 1 dargestellten Sicherungsstellung in eine zusammengefaltete Vorratsstellung entsprechend der Darstellung in der Fig. 2 und zurück überführt werden. Die Sicherungsstellung nach der Fig. 1 korrespondiert dazu, dass die flexible Sicherungsfläche 1, 2 im Ausführungsbeispiel ihre maximale Flächenausdehnung einnimmt und zwischen den sich gegenüberliegenden Bordwänden 5 gespannt ist, um auf der Transportfläche 6 abgelegtes Ladegut an einem Verrutschen im Innern des Laderaumes zu hindern.

Ausgehend von dieser ausgedehnten Sicherungsstellung nach der Fig. 1 kann die flexible Sicherungsfläche 1, 2 in die zusammengefaltete Vorratsstellung nach der Fig. 2 überführt werden, und zwar mithilfe der Raffvorrichtung 8 bis 11, H. Das heißt, beim Übergang von der ausgedehnten Sicherungsstellung nach der Fig. 1 in die zusammengefaltete Vorratsstellung entsprechend der Fig. 2 wird die flexible Sicherungsfläche 1, 2 ziehharmonikaartig zusammengefaltet. Hierfür sorgt die Raffvorrichtung 8 bis 11, H. Am Ende dieses Vorganges nimmt die flexible Sicherungsfläche 1, 2 die zusammengefaltete Vorratsstellung nach der Fig. 2 ein. Hierbei ist die in der zusammengefalteten Vorratsstellung befindliche flexible Sicherungsfläche 1, 2 am oberen Ende der Sicherungsfläche 1, 2 direkt unterhalb oder benachbart zum Strukturelement 3 angeordnet. Auf diese Weise wird unterhalb der in der Sicherungsstellung befindlichen flexiblen Sicherungsfläche 1, 2 ein Durchgang geschaffen, durch welchen beispielsweise eine auf der Transportfläche 6 gehende Bedienperson das flächige Sicherungsmittel problemlos passieren kann.

Die Raffvorrichtung 8 bis 11, H verfügt über mehrere in der ausgedehnten Sicherungsstellung gemeinsam an ein unteres Ende der Sicherungsfläche 1, 2 angeschlossene Raffseile 8, 9, 10, 11. Anhand der schematischen Darstellung in der Fig. 3 erkennt man, dass die einzelnen Raffseile 8, 9, 10, 11 beabstandet zueinander an das untere Ende der Sicherungsfläche 1, 2 angeschlossen sind, vorliegend an den untersten horizontal verlaufenden Gurt 2 bzw. den untersten Horizontalgurt 2. Außerdem sind die Raffseile 8, 9, 10, 11 parallel zueinander in der in Fig. 3 durch einen Doppelpfeil angedeuteten Raffrichtung R verlaufend orientiert. Nach dem Ausführungsbeispiel fällt die Raffrichtung R überwiegend mit der Vertikalrichtung zusammen.

Außerdem werden die Raffseile 8, 9, 10, 11 über zugehörige Umlenkeinheiten 12, 13, 14, 15 am oberen Ende der flexiblen Sicherungsfläche 1, 2 geführt. Man erkennt, dass die fraglichen Umlenkeinheiten 12, 13, 14, 15 am oberen Ende der Sicherungsfläche 1, 2 in einer Reihe angeordnet sind. Dabei stellt die Umlenkeinheit 12 das erste Reihenmitglied dar.

Die einzelnen Raffseile 8, 9, 10, 11 sind mithilfe eines Koppelelementes 16 zusammengefasst. Das Koppelelement 16 ist dabei vor der zuvor bereits in Bezug genommenen Handhabe H angeordnet. Außerdem findet das Koppelelement 16 eine Orientierung vor der ersten Umlenkeinheit 12 der in Reihe angeordneten Umlenkeinheiten 12, 13, 14, 15. Auf diese Weise kann eine Bedienperson bei einer manuellen Beaufschlagung der Handhabe H die sämtlichen Raffseile 8, 9, 10, 11 gemeinsam und gleichphasig beaufschlagen, so dass sich bei einem solchen Raffvorgang in der in Fig. 3 angedeuteten Raffrichtung R der untere und horizontal verlaufende Gurt 2 der flexiblen Sicherungsfläche 1, 2 im Idealfall parallel zur Transportfläche 6 bewegt, und zwar mit wachsendem Abstand in Richtung auf das am oberen Ende der flexiblen Sicherungsfläche 1, 2 angeordnete Strukturelement 3. Dadurch wird die flexible Sicherungsfläche 1, 2 insgesamt ziehharmonikaartig zusammengefaltet, bis sie die in der Fig. 2 dargestellte zusammengefaltete Vorratsstellung erreicht hat.

Die Handhabe H ist insgesamt mit einem Befestigungselement 17 ausgerüstet. Das Befestigungselement 17 lässt sich lösbar an unterschiedlichen Fixierpunkten festlegen. Beispielsweise kann die Handhabe H zusammen mit dem Befestigungselement 17 an der der ersten Umlenkeinheit 12 in der Reihe der Umlenkeinheiten 12 bis 15 gegenüberliegenden Bordwand 5 lösbar fixiert werden. Auf diese Weise wird die Raffvorrichtung 8 bis 11, H insgesamt in gespanntem Zustand gehalten und behält die flexible Sicherungsfläche 1, 2 zugleich ihre in der Fig. 2 dargestellte zusammengefaltete Vorratsstellung bei. Erst wenn die Raffvorrichtung 8 bis 11, H gelöst wird, kann die flexible Sicherungsfläche 1, 2 schwerkraftunterstützt von der in Fig. 2 dargestellten zusammengefalteten Vorratsstellung in die ausgedehnte Sicherungsstellung entsprechend der Fig. 1 übergehen.

Bei den Raffseilen 8 bis 11 handelt es sich im Rahmen des Ausführungsbeispiels und nicht einschränkend um Stahlseile oder Kunststoffseile. Alternativ hierzu kann aber auch ein Kunststoffband oder können mehrere Kunststoffbänder sowie Kombinationen zum Einsatz kommen. Die Raffseile 8 bis 11 sind dabei zusätzlich entlang der flexiblen Sicherungsfläche 1, 2 geführt, und zwar typischerweise in der Raffrichtung R. Für die Führung sorgen nach dem Ausführungsbeispiel Führungseinheiten 18 bzw. Schlaufen oder Ösen 18, die im Rahmen der Darstellung in den Fig. 1 und 2 in die zugehörigen vertikal verlaufenden Kunststoffgurte 1 eingebracht oder an diese angeschlossen worden sind. Darüber hinaus erkennt man insbesondere anhand der Fig. 1, dass das flächige Sicherungsmittel insgesamt geteilt oder geöffnet werden kann, und zwar quer zu seiner Längserstreckung.

Zu diesem Zweck sind jeweils Klemmschlösser 19 vorgesehen, mit deren Hilfe nicht nur die horizontal verlaufenden Gurte 2, 3 im Bereich einer in der Fig. 1 gestrichelt angedeuteten Trennstelle T geöffnet werden können, sondern die flexible Sicherungsfläche 1, 2 auch im angebauten Zustand zwischen den beiden Bordwänden 5 gespannt werden kann. Jedenfalls lassen sich die horizontal verlaufenden Kunststoffgurte 2, 3 im Bereich der Trennstelle T öffnen und mithilfe der dort vorgesehenen Klemmschlösser 19 verschließen sowie kann insgesamt die flexible Sicherungsfläche 1, 2 gespannt werden. Zugleich lässt sich die flexible Sicherungsfläche 1, 2 mithilfe der Klemmschlösser 19 entlasten. Auf diese Weise können die jeweils randseitig der Sicherungsfläche 1, 2 vorgesehenen Anschlagvorrichtungen 7 problemlos in die Öffnungen in der zugehörigen Bordwand 5 eingehängt bzw. aus diesen wieder entfernt werden.

Außerdem besteht die Möglichkeit, die hierdurch entlastete flexible Sicherungsfläche 1, 2 insgesamt mithilfe der Raffvorrichtung 8 bis 11, H in die zusammengefaltete Vorratsstellung entsprechend der Fig. 2 zu überführen. Dazu mag das Befestigungselement 17 an der Handhabe H nicht an der der ersten Umlenkeinheit 12 gegenüberliegenden Bordwand 5 lösbar fixiert werden, sondern an einem Haken 20 benachbart zur Trennstelle T. Auf diese Weise kann das in der zusammengefalteten Vorratsstellung befindliche flächige Sicherungsmittel insgesamt in der gewünschten Position in Längsrichtung der Transportfläche 6 ausgerichtet und positioniert werden. Anschließend lassen sich die Anschlagvorrichtungen 7 einfach an den gegenüberliegenden Bordwänden 5 bzw. in den zugehörigen Öffnungen montieren. Erst im Anschluss hieran wird dann die flexible Sicherungsfläche 1, 2 mithilfe der Klemmschlösser 19 gespannt.

## Patentansprüche

1. Flächiges Sicherungsmittel, insbesondere Sicherungsnetz, zum Sichern einer Ladung während ihres Transportes auf der Ladefläche (6) eines Fahrzeuges, mit einer größenvariablen flexiblen Sicherungsfläche (1, 2), und mit randseitig der Sicherungsfläche (1, 2) vorgesehenen Anschlagvorrichtungen (7) zur lösbaren Fixierung der Sicherungsfläche (1, 2) an Bordwänden (5) des Fahrzeuges,
**dadurch gekennzeichnet, dass**
eine Raffvorrichtung (8 bis 11, H) vorgesehen ist, welche die flexible Sicherungsfläche (1, 2) zumindest von einer ausgedehnten Sicherungsstellung in eine zusammengefaltete Vorratsstellung und zurück überführt, wobei
die Raffvorrichtung (8 bis 11, H) zumindest ein an ein in Sicherungsstellung unteres Ende der Sicherungsfläche (1, 2) angeschlossenes Raffseil (8, 9, 10, 11) aufweist und endseitig des Raffseils (8, 9, 10, 11) eine Handhabe (H) vorgesehen ist, und wobei
die Handhabe (H) mit einem Befestigungselement (17) zur lösbaren Fixierung beispielsweise an der Bordwand (5) ausgerüstet ist.

2. Flächiges Sicherungsmittel nach Anspruch 1, **dadurch gekennzeichnet, dass** die Raffvorrichtung (8 bis 11, H) zusätzlich mit wenigstens einer Umlenkeinheit (12, 13, 14, 15) für das Raffseil (8, 9, 10, 11) am in Sicherungsstellung oberen Ende der Sicherungsfläche (1, 2) ausgerüstet ist.

3. Flächiges Sicherungsmittel nach Anspruch 1 oder 2, **dadurch gekennzeichnet, dass** mehrere Raffseile (8, 9, 10, 11) gemeinsam an das untere Ende der Sicherungsfläche (1, 2) angeschlossen sind.

4. Flächiges Sicherungsmittel nach Anspruch 3, **dadurch gekennzeichnet, dass** die Raffseile (8, 9, 10, 11) beabstandet zueinander an das untere Ende der Sicherungsfläche (1, 2) angeschlossen sind.

5. Flächiges Sicherungsmittel nach Anspruch 3 oder 4, **dadurch gekennzeichnet, dass** die Raffseile (8, 9, 10, 11) parallel zueinander in Raffrichtung (R) verlaufen und über zugehörige Umlenkeinheiten (12, 13, 14, 15) geführt werden.

6. Flächiges Sicherungsmittel nach einem der Ansprüche 3 bis 5, **dadurch gekennzeichnet, dass** die Raffseile (8, 9, 10, 11) mittels eines Koppelelementes (16) zusammengefasst sind.

7. Flächiges Sicherungsmittel nach Anspruch 6, **dadurch gekennzeichnet, dass** das Koppelelement (16) vor der Handhabe (H) angeordnet ist.

8. Flächiges Sicherungsmittel nach einem der Ansprüche 5 bis 7, **dadurch gekennzeichnet, dass** die Umlenkeinheiten (12, 13, 14, 15) am oberen Ende der Sicherungsfläche (1, 2) in Reihe angeordnet sind.

9. Flächiges Sicherungsmittel nach einem der Ansprüche 6 bis 9, **dadurch gekennzeichnet, dass** das Koppelelement (16) vor der ersten Umlenkeinheit (12) in der Reihe angeordnet ist.

10. Flächiges Sicherungsmittel nach einem der Ansprüche 1 bis 9, **dadurch gekennzeichnet, dass** das Raffseil bzw. die Raffseile (8, 9, 10, 11) in Raffrichtung (R) mithilfe von Führungseinheiten (18) an der flexiblen Sicherungsfläche (1, 2) festgelegt ist / sind.

11. Flächiges Sicherungsmittel nach einem der Ansprüche 1 bis 10, **dadurch gekennzeichnet, dass** das jeweilige Raffseil (8, 9, 10, 11) als Stahlseil, Kunststoffseil, Kunststoffband oder als Kombination ausgebildet ist.

12. Flächiges Sicherungsmittel nach einem der Ansprüche 1 bis 11, **dadurch gekennzeichnet, dass** ein zusätzliches Strukturelement (3) zumindest am oberen Ende der flexiblen Sicherungsfläche (1, 2), beispielsweise ein Kunststoffgurt, eine Sicherungsstange etc. vorgesehen ist.

## Claims

1. Planar securing means, more particularly securing net, for securing a load during its transportation on the loading area (6) of a vehicle, with a flexible securing surface (1, 2) that is variable in size, and fastening devices (7), provided at edge of the securing surface (1, 2), for detachably fixing the securing surface (1, 2) to the side walls (5) of the vehicle, **characterised in that**
a gathering device (8 to 11, H) is provided, which transforms the flexible securing surface (1. 2) at least from an extended securing position into a folded-up storage position and vice versa, wherein
the gathering device (8 to 11, H) comprises at last one gathering rope (8, 9, 10, 11) connected to a lower end of the securing surface (1, 2) in the securing position and at the end of the gathering rope (8, 9, 10, 11) a handle (H) is provided, and wherein
the handle (H) is equipped with a fastening element (17) for detachably fixing, for example, to the side wall (5).

2. Planar securing means according to claim 1, **characterised in that** the gathering device (8 to 11, H) is also equipped with at least one deflection unit (12, 13, 14, 15) for the gathering rope (8, 9, 10, 11) at upper end of the securing surface (1, 2) in the securing position.

3. Planar securing means according to claim 1 or 2, **characterised in that** several gathering ropes (8, 9, 10, 11) are jointly connected to the lower end of the securing surface (1, 2).

4. Planar securing means according to claim 3, **characterised in that** the gathering ropes (8, 9, 10, 11) are connected to the lower end of the securing surface (1, 2) at a distance from one another.

5. Planar securing means according to claim 3 or 4, **characterised in that** the gathering ropes (8, 9, 10, 11) run in parallel to each other in the gathering direction (R) and are guided via appurtenant deflection units (12, 13, 14, 15).

6. Planar securing means according to any one of claims 3 to 5, **characterised in that** the gathering ropes (8, 9, 10, 11) are brought together by means of a coupling element (16).

7. Planar securing means according to claim 6, **characterised in that** the coupling element (16) is arranged in front of the handle (H).

8. Planar securing means according to any one of claims 5 to 7, **characterised in that** the deflection units (12, 13, 14, 15) are arranged in a row at the upper end of the securing surface (1, 2).

9. Planar securing means according to any one of claims 6 to 9 **characterised in that** the coupling element (16) is arranged before the deflection unit (12) in the row.

10. Planar securing means according to any one of claims 1 to 9, **characterised in that** the gathering rope(s) (8, 9, 10, 11) is/are fixed on the flexible securing surface (1, 2) in the gathering direction (R) by means of guiding units (18).

11. Planar securing means according to any one of claims 1 to 10, **characterised in that** the respective gathering rope (8, 9, 10, 11) is designed as a steel cable, plastic cable, plastic band or combination.

12. Planar securing means according to any one of claims 1 to 11, **characterised in that** an additional structural element (3) is provided at least at the upper end of the flexible securing surface (1, 2), for example a plastic strap, a securing rod etc.

## Revendications

1. Moyen de sécurisation plan, notamment filet de sécurisation, destiné à sécuriser un chargement pendant son transport sur la surface de chargement (6) d'un véhicule, pourvu d'une surface de sécurisation (1, 2) souple, de dimensions variables, et pourvu de dispositifs de butée (7) prévus sur les bords de la surface de sécurisation (1, 2), pour la fixation amovible de la surface de sécurisation (1, 2) sur des parois de bord (5) du véhicule,
**caractérisé**
**en ce qu'**il est prévu un dispositif plisseur (8 à 11, H), lequel fait passer la surface de sécurisation (1, 2) souple au moins d'une position de sécurisation déployée dans une position de réserve pliée et inversement,
le dispositif plisseur (8 à 11, H) comportant au moins un câble de plissage (8, 9, 10, 11) raccordé sur une extrémité inférieure de la surface de sécurisation (1, 2) dans la position de sécurisation et sur le côté d'extrémité du câble de plissage (8, 9, 10, 11) étant prévue une manette (H), et
la manette (H) étant équipée d'un élément de fixation (17) destiné à une fixation amovible, par exemple sur la paroi de bord (5).

2. Moyen de sécurisation plan selon la revendication 1, **caractérisé en ce que** sur l'extrémité supérieure de la surface de sécurisation (1, 2) en position de sécurisation, le dispositif plisseur (8 à 11, H) est équipé additionnellement d'au moins une unité de renvoi (12, 13, 14, 15) pour le câble de plissage (8, 9, 10, 11) .

3. Moyen de sécurisation plan selon la revendication 1 ou 2, **caractérisé en ce que** plusieurs câbles de plissage (8, 9, 10, 11) sont raccordés conjointement sur l'extrémité inférieure de la surface de sécurisation (1, 2).

4. Moyen de sécurisation plan selon la revendication 3, **caractérisé en ce que** les câbles de plissage (8, 9, 10, 11) sont raccordés avec un écart mutuel sur l'extrémité inférieure de la surface de sécurisation (1, 2).

5. Moyen de sécurisation plan selon la revendication 3 ou 4, **caractérisé en ce que** les câbles de plissage (8, 9, 10, 11) s'écoulent à la parallèle les uns des autres dans la direction de plissage (R) et sont guidés par l'intermédiaire d'unités de renvoi (12, 13, 14, 15) associées.

6. Moyen de sécurisation plan selon l'une quelconque des revendications 3 à 5, **caractérisé en ce que** les câbles de plissage (8, 9, 10, 11) sont regroupés au moyen d'un élément d'accouplement (16).

7. Moyen de sécurisation plan selon la revendication 6, **caractérisé en ce que** l'élément d'accouplement (16) est placé à l'avant de la manette (H).

8. Moyen de sécurisation plan selon l'une quelconque des revendications 5 à 7, **caractérisé en ce que** les unités de renvoi (12, 13, 14, 15) sont placées en rangées sur l'extrémité supérieure de la surface de sécurisation (1, 2).

9. Moyen de sécurisation plan selon l'une quelconque des revendications 6 à 9, **caractérisé en ce que** l'élément d'accouplement (16) est placé à l'avant de la première unité de renvoi (12) dans la rangée.

10. Moyen de sécurisation plan selon l'une quelconque des revendications 1 à 9, **caractérisé en ce que** le câble de plissage ou les câbles de plissage (8, 9, 10, 11) est/sont immobilisé (s) dans la direction de plissage (R) à l'aide d'unités de guidage (18) sur la surface de sécurisation (1, 2) souple.

11. Moyen de sécurisation plan selon l'une quelconque des revendications 1 à 10, **caractérisé en ce que** le câble de plissage (8, 9, 10, 11) respectif est conçu sous la forme d'un câble d'acier, d'un câble en matière plastique, d'une bande de matière plastique ou d'une association de ceux-ci.

12. Moyen de sécurisation plan selon l'une quelconque des revendications 1 à 11, **caractérisé en ce qu'**un élément structurel (3) additionnel, par exemple une sangle en matière plastique, une barre de sécurisation, etc. est prévu au moins sur l'extrémité supérieure de la surface de sécurisation (1, 2) souple.
